# EUROPÄISCHE PATENTSCHRIFT

(11) **EP 4 041 578 B1**
(45) Veröffentlichungstag und Bekanntmachung des Hinweises auf die Patenterteilung: **24.01.2024**
(21) Anmeldenummer: 20780132.5
(22) Anmeldetag: 22.09.2020
(51) Int. Cl.: B60H 1/00, B60H 1/32

(54) **KÄLTEANLAGE MIT WÄRMEPUMPEN- UND REHEATFUNKTION**
REFRIGERATION SYSTEM WITH A HEAT PUMPING AND REHEATING FUNCTION
SYSTÈME DE RÉFRIGÉRATION À FONCTION DE POMPAGE DE CHALEUR ET DE RÉCHAUFFAGE

(30) Priorität: 07.10.2019 DE 102019126850
(43) Veröffentlichungstag der Anmeldung: 17.08.2022
(73) Patentinhaber: Audi AG, 85045 Ingolstadt (DE)
(72) Erfinder: SCHROEDER, Dirk, 85077 Manching (DE); REBINGER, Christian, 80807 München (DE); ROTTENKOLBER, Helmut, 93349 Mindelstetten (DE)
(86) Internationale Anmeldenummer: PCT/EP2020/076387
(87) Internationale Veröffentlichungsnummer: WO 2021/069206

(56) Entgegenhaltungen:
- WO-A1-2012/120843
- WO-A1-2019/007558
- DE-B3-102018 201 165

## Beschreibung

Die Erfindung betrifft eine modulare Kälteanlage für ein Fahrzeug.

Fahrzeugklimaanlagen können unterschiedliche Funktionalitäten aufweisen, so dass neben den Grundfunktionen, wie Heizen, Kühlen und Entfeuchten der in den Fahrzeuginnenraum zugeführten Zuluft, auch Wärmepumpenfunktionalitäten und Reheat-Funktionen realisierbar sind.

Aus der DE 10 2011 118 162 A1 ist eine kombinierte Kälteanlage mit Wärmepumpenfunktion bekannt, bei welcher ein Heizregister in einem ersten Betriebsmodus einer Erwärmung eines Fahrzeuginnenraums dient, wobei das Heizregister in einem weiteren Modus durch einen Verdampfer unterstützt wird. Ein bidirektional durchströmbarer Wärmeübertrager wird im Kälteanlagenbetrieb als Kondensator betrieben und nimmt im Wärmepumpenbetrieb als Wärmepumpenverdampfer Wärme aus der Umgebung auf.

Eine Fahrzeugklimaanlage mit Wärmepumpenfunktion zeichnet sich gemäß der DE 10 2015 121 185 A1 dadurch aus, dass der Kältemittelkreislauf einen bidirektional durchströmbaren Verdampfer zur Unterstützung der Erwärmung der in einen Fahrzeuginnenraum zugeführten Zuluft mittels eines Heizregisters aufweist. Das Heizregister wird permanent mit Kältemittel durchströmt, wobei in einem Kälteanlagenbetrieb ein Umgebungs-Wärmeübertrager dem Heizregister nachgeschaltet ist und in einem Wärmepumpenbetrieb ein Zusatz-Wärmeübertrager oder der Umgebungs-Wärmeübertrager als Wärmequelle durchströmt wird.

Weiterhin ist aus der DE 10 2018 201 165 B3 ein Kältemittelkreislauf bekannt, welcher zur Realisierung einer Kühlfunktion einen Innenraum-Verdampfer mit zugeordnetem Expansionsorgan, einen niederdruckseitigen Akkumulator einen inneren Wärmeübertrager, einen Kältemittelverdichter und einen äußeren Kondensator oder Gaskühler aufweist, wobei diese Komponenten in der aufgeführten Reihenfolge von Kältemittel durchströmt werden. Ferner weist dieser Kältemittelkreislauf einen Chiller-Zweig mit zugeordnetem Expansionsorgan und einen Heizzweig mit einem Heizregister auf, wobei der Kondensator oder Gaskühler als Wärmepumpen-Wärme-übertrager dient.

Ferner offenbart auch die WO 2019/007558 A1 einen Kältemittelkreislauf mit einem Verdampfer mit zugeordnetem Expansionsorgan, einem Kältemittelsammler, einem inneren Wärmeübertrager, einem Kältemittelverdichter und einem zweiflutigen Wärmeübertrager. Ferner weist dieser Kältemittelkreislauf einen Chiller-Zweig mit zugeordnetem Expansionsorgan und einen Heizzweig mit einem Heizregister auf, wobei der zweiflutigen Wärmeübertrager als Wärmepumpen-Wärmeübertrager dient.

Schließlich beschreibt auch die DE 10 2017 208 228 A1 eine Fahrzeugklimaanlage mit mehreren bidirektionalen Wärmeübertragern, deren Arbeitsmodi durch eine Umkehrung einer Strömungsrichtung eines Fluids innerhalb der Wärmeübertrager umgeschaltet werden.

Mit den bekannten Fahrzeugklimaanlagen können unterschiedliche Funktionalitäten realisiert werden, wobei hierfür unterschiedliche Verschaltungen verwendet werden. Um spezifische Kundenwünsche erfüllen zu können, müssen in der Regel die Kältemittelkreisläufe entsprechend angepasst werden, wodurch der Aufwand für Entwicklung und Produktion spezifischer Kältemittelkreisläufe zunimmt und damit auch die Kosten ansteigen.

Es ist daher die Aufgabe der Erfindung, eine modulare Kälteanlage für ein Fahrzeug bereitzustellen, mit welcher eine hohe Flexibilität hinsichtlich der Realisierung von Systemen mit verschiedenen Funktionalitäten realisierbar ist.

Diese Aufgabe wird gelöst mit einer modularen Kälteanlage für ein Fahrzeug mit den Merkmalen des Patentanspruchs 1.

Eine solche modulare Kälteanlage für ein Fahrzeug umfasst mehrere Module zur Realisierung verschiedener Funktionen:
a) ein Basismodul zur Realisierung einer Kühl-Funktion, aufweisend
a1) einen Kältemittelverdichter,
a2) einen mit dem Hochdruckauslass des Kältemittelverdichters mittels eines Absperrorgans verbindbaren Hochdruckabschnitt mit einem direkten oder indirekten Kondensator oder Gaskühler, wobei der direkte oder indirekte Kondensator oder Gaskühler in einem Kälteanlagen-Betrieb und in einem Wärmepumpen-Betrieb betreibbar ist, und
a3) einen mit dem Niederdruckeinlass des Kältemittelverdichters verbundenen Niederdruckabschnitt mit mindestens einem Verdampfer und einem Chiller mit vorgeschalteten Chiller-Expansionsorgans, wobei der Niederdruckabschnitt stromaufwärts über ein Wärmepumpen-Expansionsorgan mit dem Hochdruckabschnitt verbunden ist, welches im Kälteanlagen-Betrieb als Verdampfer-Expansionsorgan des Verdampfers eingesetzt wird,
b) ein erstes Erweiterungsmodul zur Realisierung einer Heiz- und einer Reheat-Funktion, aufweisend
b1) einen mit dem Hochdruckauslass des Kältemittelverdichters mittels eines Absperrorgans verbindbaren Heizzweig mit einem Wärmepumpen-Wärmeübertrager, welcher über einen ersten Reheat-Zweig mit einem absperrbaren Ventilorgan mit dem direkten oder indirekten Kondensator oder Gaskühler verbindbar ist, und
b2) einen Wärmepumpenrückführzweig mit einem absperrbaren Ventilorgan zum Verbinden des direkten oder indirekten Kondensators oder Gaskühlers mit dem Niederdruckabschnitt, und
c) ein zweites Erweiterungsmodul zur Realisierung einer Luftvorwärm-Funktion mittels des Verdampfer, aufweisend
c1) einen Vorwärmzweig mit einem Vorwärm-Expansionsorgan, wobei der Vorwärmzweig einen Austritt des Wärmepumpen-Wärmeübertragers mit einem Austritt des Verdampfers eingangsseitig verbindet, wobei der Austritt des Verdampfers auf dessen Kühlbetrieb bezogen ist, und
c2) ein absperrbares Ventilorgan, mit welchem der der Niederdruckabschnitt des Basismoduls mit dem Austritt des Verdampfers verbunden ist, wobei
   - zur Reduzierung der Anzahl der Funktionen auf das erste Erweite-rungsmodul oder das zweite Erweiterungsmodul verzichtbar ist, oder
   - zur Realisierung einer Basis-Kälteanlage auf das erste Erweiterungsmodul und das zweite Erweiterungsmodul verzichtbar ist..

Nach der Erfindung ist die Kälteanlage für ein Fahrzeug aus mehreren Modulen, nämlich einem Basismodul zur Realisierung der Grundfunktion "Kühlen" sowie wenigstens zwei Erweiterungsmodulen aufgebaut, wobei das erste Erweiterungsmodul die Funktionen Heizen mittels einer Wärmepumpenfunktion sowie Reheat-Funktionen zum Entfeuchten der dem Fahrzeuginnenraum zugeführten Zuluft übernimmt. Mit dem zweiten Erweiterungsmodul ist es möglich, zusätzlich zu dem Wärmepumpen-Wärmeübertrager den Verdampfer als Luftvorwärmer zum Heizen einzusetzen.

Mit dieser erfindungsgemäßen modularen Kälteanlage kann eine große Anzahl von Schaltungsvarianten realisiert werden, so dass für jeden Betriebspunkt oder Betriebssituation der Kälteanlage eine maximale Auswahl und maximale Möglichkeiten für eine ideale Verschaltung und Auswahl aktiver Komponenten bestehen.

Ein weiterer Vorteil dieser modularen Kälteanlage besteht darin, dass die Funktionsanzahl durch den Verzicht auf das zweite Erweiterungsmodul und/oder das erste Erweiterungsmodul und damit auch Bauteile reduziert werden, bis schließlich mit dem Basismodul lediglich ein Basis-Kälteanlagen-System zur Verfügung steht.

Mit dieser Erfindung steht nunmehr eine modulare Kälteanlage zur Verfügung, mit welcher in flexibler Weise individuelle Kälteanlagen aufgebaut und unterschiedliche Funktionalitäten dargestellt werden können.

Eine vorteilhafte Weiterbildung ist derart vorgesehen, dass das absperrbare Ventilorgan des zweiten Erweiterungsmoduls durch ein Expansionsorgan ersetzt ist. Damit kann der Verdampfer auf einen Zwischendruck betrieben werden, das einen EntfeuchtungsBetrieb bei Umgebungstemperaturen unter 0 °C ermöglicht.

Eine bevorzugte Weiterbildung der Erfindung sieht ein drittes Erweiterungsmodul vor, welches einen zweiten Reheat-Zweig mit einem absperrbaren Ventilorgan aufweist, wobei der zweite Reheat-Zweig den Wärmepumpen-Wärmeübertrager ausgangsseitig mit dem Wärmepumpen-Expansionsorgan verbindet. Damit wird über den Wärmepumpen-Wärmeübertrager eine Direktverbindung zu dem Kondensator oder Gaskühler, zum Chiller und insbesondere zum Verdampfer zur Durchführung eines Reheat-Betriebs ermöglicht.

Weiterhin ist weiterbildungsgemäß ein viertes Erweiterungsmodul vorgesehen, bei welchem der Verdampfer eingangsseitig mit einem Verdampfer-Expansionsorgan verbunden ist. Damit ist eine flexible Kältemittelverteilung über den Verdampfer und den Chiller im Kühlbetrieb möglich.

Schließlich ist nach einer letzten bevorzugten Ausgestaltung der Erfindung ein fünftes Erweiterungsmodul vorgesehen, bei welchem das absperrbare Ventilorgan des ersten Reheat-Zweiges als Reheat-Expansionsorgan ausgebildet ist. Damit kann in einem Reheat-Betrieb neben dem Nieder- und Hochdruckniveau ein drittes Druckniveau realisiert werden.

Weitere Vorteile, Merkmale und Einzelheiten der Erfindung ergeben sich aus der nachfolgenden Beschreibung bevorzugter Ausführungsformen sowie anhand der Zeichnungen. Dabei zeigen:
- Figur 1: eine modulare Kälteanlage gemäß der Erfindung mit einem Basismodul sowie einem ersten, zweiten, dritten, vierten und fünften Erweiterungsmodul,
- Figur 2: eine modulare Kälteanlage mit einem Basismodul und einem ersten, dritten, vierten und einem fünften Erweiterungsmodul, jedoch ohne ein zweites Erweiterungsmodul, und
- Figur 3: eine modulare Kälteanlage gemäß der Erfindung mit einem Basismodul sowie einem ersten und zweiten Erweiterungsmodul.

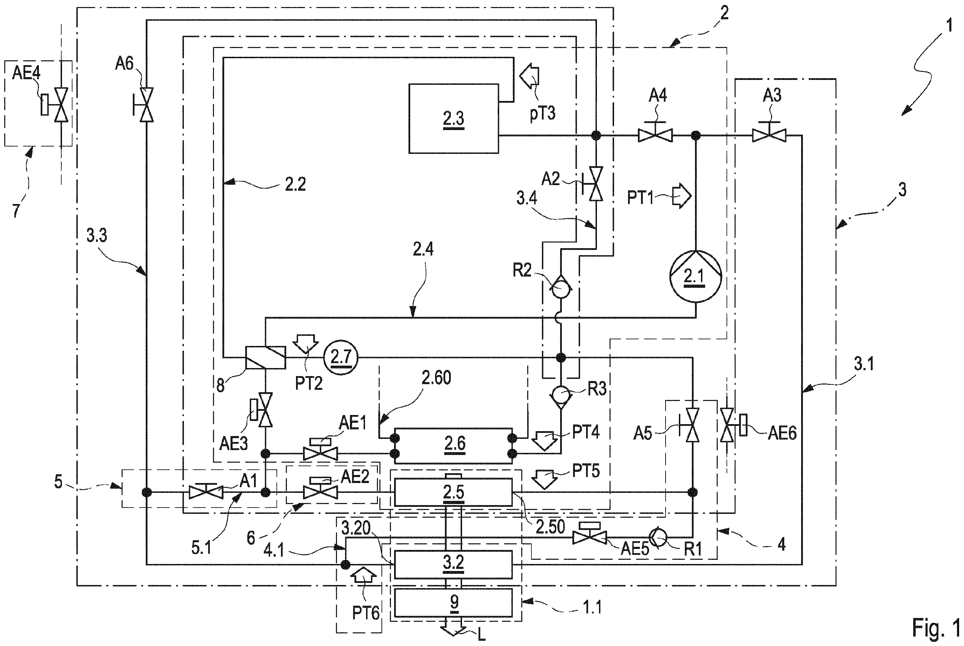

Die modulare Kälteanlage 1 gemäß Figur 1 besteht aus einem Basismodul 2 sowie mehreren Erweiterungsmodulen, nämlich einem ersten Erweiterungsmodul 3, einem zweiten Erweiterungsmodul 4, einem dritten Erweiterungsmodul 5, einem vierten Erweiterungsmodul 6 und einem fünften Erweiterungsmodul 7, die mit den Nummerierungen 3, 4, 5, 6 und 7 dargestellt sind und kann sowohl in einem Kälteanlagenbetrieb (kurz AC-Betrieb genannt) als auch in einem Wärmepumpen-Betrieb (kurz WP-Betrieb genannt) betrieben werden, wobei der Heizbetrieb mittels einer Wärmepumpenfunktion durchgeführt wird.

Das Basismodul 2 umfasst einen Kältemittelkreislauf mit folgenden Komponenten und Leitungsabschnitten:
- einen Kältemittelverdichter 2.1,
- einen mit dem Hochdruckauslass des Kältemittelverdichters 2.1 mittels eines Absperrorgans A4 verbindbaren Hochdruckabschnitt 2.2 mit einem direkten oder indirekten Kondensator oder Gaskühler 2.3, wobei der direkte oder indirekte Kondensator oder Gaskühler 2.3 in einem Kälteanlagen-Betrieb und in einem Wärmepumpen-Betrieb betreibbar ist, und
- einen mit dem Niederdruckeinlass des Kältemittelverdichters 2.1 verbundenen Niederdruckabschnitt 2.4 mit einem Verdampfer 2.5 und einem Chiller 2.6 mit vorgeschalteten Chiller-Expansionsorgans AE1, wobei der Niederdruckabschnitt 2.4 stromaufwärts über ein Wärmepumpen-Expansionsorgan AE3 mit dem Hochdruckabschnitt 2.2 verbunden ist.

Der direkte oder indirekte Kondensator oder Gaskühler 2.3 dient dem Wärmeaustausch mit der Umgebung des Fahrzeugs.

Der Chiller 2.6, welcher mit einem Kühlmittelkreislauf 2.60 thermisch verbunden ist, dient zur Kühlung einer elektrischen Komponente des Fahrzeugs, bspw. einer Hochvoltbatterie.

Mit diesem Basismodul 2 ist eine Kühlfunktion, also ein AC-Betrieb durchführbar. Hierbei ist auf das absperrbare Ventilorgan A4 verzichtbar und wird durch einen den Hochdruckauslass der Kältemittelverdichters 2.1 mit dem direkten oder indirekten Kondensator oder Gaskühler 2.3 verbindenden Leitungsabschnitt ersetzt. Das Wärmepumpen-Expansionsorgan AE3 wird als Verdampfer-Expansionsorgan direkt dem Verdampfer 2.5 vorgeschaltet, so dass der Chillerzweig aus dem Chiller 2.6 und demselben zugeordneten Chiller-Expansionsorgan AE1 dem Verdampferzweig aus Verdampfer 2.5 und demselben zugeordneten Verdampfer-Expansionsorgan parallel geschaltet sind.

Gemäß Figur 1 weist das Basismodul 2 auch einen in dem Niederdruckabschnitt 2.4 angeordneten Niederdruck-Akkumulator 2.7 sowie einen inneren Wärmeübertrager 9 mit einem Hochdruckabschnitt und einem Niederdruckabschnitt auf.

Das erste Erweiterungsmodul 3 umfasst folgende Komponenten und Leitungsabschnitte:
- einen mit dem Hochdruckauslass des Kältemittelverdichters 2.1 mittels eines Absperrorgans A3 verbindbaren Heizzweig 3.1 mit einem direkten oder indirekten Wärmepumpen-Wärmeübertrager 3.2 (auch Heizregister genannt), welcher über einen ersten Reheat-Zweig 3.3 mit einem absperrbaren Ventilorgan A6 mit dem direkten oder indirekten Kondensator oder Gaskühler 2.3 verbindbar ist, und
- einen Wärmepumpenrückführzweig 3.4 mit einem absperrbaren Ventilorgan A2 zum Verbinden des direkten oder indirekten Kondensators oder Gaskühlers 2.3 mit dem Niederdruckabschnitt 2.4.

Der Wärmepumpenrückführzweig 3.4 umfasst auch ein Rückschlagventil R2, mit welchem eine Rückströmung von Kältemittel aus dem Chiller 2.6 und/oder dem Verdampfer 2.5 in den Wärmepumpenrückführzweig 3.4 verhindert wird.

Mit diesem ersten Erweiterungsmodul 3 lassen sich sowohl eine Heizfunktion mittels einer Luft- und/oder Wasser-Wärmepumpenfunktion als auch verschiedene Reheat-Funktionen durchführen.

Der hier aufgezeigte direkte Wärmepumpen-Wärmeübertrager 3.2 ist zusammen mit dem Verdampfer 2.5 in einem Klimagerät 1.1 verbaut, wobei zur Konditionierung eines in einen Fahrzeuginnenraum geführten Zuluftstroms L dieser zunächst über den Verdampfer 2.5 und anschließend über den Wärmepumpen-Wärmeübertrager 3.2 und gegebenenfalls über ein elektrisches Heizelement 9 geführt ist. Dieses Heizelement 9 ist bspw. als Hochvolt-PTC-Heizelement ausgeführt.

Das zweite Erweiterungsmodul 4 umfasst folgende Komponenten und Leitungsabschnitte:
- einen Vorwärmzweig 4.1 mit einem Vorwärm-Expansionsorgan AE5, wobei der Vorwärmzweig 4.1 den Wärmepumpen-Wärmeübertrager 3.2 ausgangsseitig mit dem Verdampfer 2.5 eingangsseitig verbindet, und
- ein absperrbares Ventilorgan A5, welches mit dem Ausgang des Verdampfers 2.5 verbunden ist.

Mit diesem zweiten Erweiterungsmodul 4 lässt sich der Verdampfer 2.5 als Vorwärmer einsetzen, wobei in diesem Fall das Kältemittel im Vergleich zum AC-Betrieb den Verdampfer 2.5 in entgegengesetzter Richtung durchströmt.

Das dritte Erweiterungsmodul 5 umfasst einen zweiten Reheat-Zweig 5.1 mit einem absperrbaren Ventilorgan A1, wobei der zweite Reheat-Zweig 5.1 den Wärmepumpen-Wärmeübertrager 3.2 ausgangsseitig mit dem Wärmepumpen-Expansionsorgan AE3 verbindet. Damit wird über den Wärmepumpen-Wärmeübertrager 3.2 eine Direktverbindung zu dem direkten oder indirekten Kondensator oder Gaskühler 2.3 über das Wärmepumpen-Expansionsorgan AE3, zum Chiller 2.6 und zum Verdampfer 2.5 zur Durchführung eines Reheat-Betriebs ermöglicht.

Mit dem vierten Erweiterungsmodul 6 wird dem Verdampfer 2.5 eingangsseitig ein Verdampfer-Expansionsorgan AE2 vorgeschaltet. Damit ist eine flexible Kältemittelverteilung über den Verdampfer 2.5 und den Chiller 2.6 im Kühlbetrieb der Kälteanlage 1 möglich.

Mit dem fünften Erweiterungsmodul 7 wird das absperrbare Ventilorgan A6 des ersten Reheat-Zweiges 3.3 durch ein Reheat-Expansionsorgan AE4 ersetzt. Damit kann in einem Reheat-Betrieb neben dem Nieder- und Hochdruckniveau ein drittes Druckniveau, das sogenannte Mitteldruckniveau realisiert werden.

Als Sensoren weist die Kälteanlage 1 zur Steuerung und Regelung des Systems mehrere Druck-Temperatursensoren auf.

So ist dem Kältemittelverdichter 5 ein erster Druck-Temperatursensor pT1 bevorzugt am Hochdruckauslass zugeordnet, ferner ein zweiter Druck-Temperatursensor pT2 am Ausgang des Niederdruck-Akkumulators 2.7, ein dritter Druck-Temperatursensor pT3 am Ausgang des direkten oder indirekten Kondensators oder Gaskühlers 2.3, ein vierter Druck-Temperatursensor pT4 am Ausgang des Chillers 2.6, ein fünfter Druck-Temperatursensor pT5 am Ausgang des Verdampfers 2.5 und ein sechster Druck-Temperatursensor pT6 am Ausgang des Wärmepumpen-Wärmeübertragers 3.2 angeordnet.

Im Folgenden werden der AC-Betrieb und der Heizbetrieb der Kälteanlage 1 erläutert.

Mit den am Hochdruckauslass des Kältemittelverdichters 2.1 angeordneten Absperrorganen A3 und A4 wird der Kältemittelstrom ausgehend von der Hochdruckseite des Kältemittelverdichters 2.1 in Abhängigkeit des Zustandes dieser beiden Absperrorgane A3 und A4 entweder bei offenem Absperrorgan A4 und gesperrtem Absperrorgan A3 in den Hochdruckabschnitt 2.2 zur Durchführung eines AC-Betriebs geleitet oder strömt bei offenem Absperrorgan A3 und geschlossenem Absperrorgan A4 zur Durchführung eines Heizbetriebs oder Reheat-Betriebs mittels einer Wärmepumpenfunktion in den Heizzweig 3.1.

Im AC-Betrieb der Kälteanlage 1 strömt das auf Hochdruck verdichtete Kältemittel ausgehend von dem Kältemittelverdichter 2.1 bei offenem Absperrorgan A4 in den direkten oder indirekten Kondensator oder Gaskühler 2.3, den Hochdruckabschnitt des inneren Wärmeübertragers 8, über das vollständig geöffnete Wärmepumpen-Expansionsorgan AE3 mittels des Verdampfer-Expansionsorgans AE2 in den Verdampfer 2.5 und/oder mittels des Chiller-Expansionsorgans AE1 in den Chiller 2.6. Aus dem Chiller 2.6 strömt das Kältemittel über ein Rückschlagventil R3, den Niederdruck-Akkumulator 2.7 und den Niederdruckabschnitt des inneren Wärmeübertragers 8 zurück zum Kältemittelverdichter 2.1, während das Kältemittel aus dem Verdampfer 2.5 über das Absperrorgan A5 des zweiten Erweiterungsmodul 4 strömt und anschließend über den Niederdruck-Akkumulator 2.7 und den Niederdruckabschnitt des inneren Wärmeübertragers 8 ebenso zurück zum Kältemittelverdichter 2.1 fließen kann.

Im Folgenden soll der Heizbetrieb der Kälteanlage 1 beschrieben werden. Hierzu wird mittels wenigstens einer Wärmequelle ein Wärmpumpenbetrieb durchgeführt. Im Wärmepumpenbetrieb wird der dem Fahrzeuginnenraum zugeführte Kabinen-Zuluftstrom L mittels des Wärmepumpen-Wärmeübertragers 3.2 des ersten Erweiterungsmoduls 3 erwärmt und ggf. über ein Heizelement 9 geführt, bevor der Zuluftstrom L in den Fahrzeuginnenraum strömen kann.

Im Heizbetrieb der Kälteanlage 1 unter Einsatz des Chillers 2.6 zur Realisierung einer Wasser-Wärmepumpe oder unter Einsatz des direkten oder indirekten Kondensators oder Gaskühlers 2.3 als Wärmepumpenverdampfer zur Realisierung einer Luft-Wärmepumpe ist das Absperrorgan A4 geschlossen und das Absperrorgan A3 geöffnet, so dass heißes Kältemittel in den Heizzweig 3.1 strömen kann.

Zur Durchführung des Wasser-Wärmepumpenbetriebs mittels des Chillers 2.6 strömt das mittels des Kältemittelverdichters 2.1 verdichtete Kältemittel über den Heizzweig 3.1 in den Wärmepumpen-Wärmeübertrager 3.2 zur Abgabe von Wärme an den Zuluftstrom L und wird anschließend über das geöffnete Absperrorgan A1 mittels des Chiller-Expansionsorgans AE1 in den Chiller 2.6 zur Aufnahme von Abwärme der in dem Kühlmittelkreislauf 2.60 angeordneten elektrischen und/oder elektronischen Komponenten entspannt. Bei dieser Heizfunktion sind das Wärmepumpen-Expansionsorgan AE3 und das Reheat-Expansionsorgan AE4 geschlossen. Über das geöffnete Absperrorgan A2 des Wärmepumpenrückführzweiges 3.4 wird im Wasser-Wärmepumpenbetrieb ausgelagertes Kältemittel aus dem Hochdruckabschnitt 2.2 abgesaugt und über das Rückschlagventil R2 dem Kältemittelverdichter 2.1 zugeführt.

Der Wärmepumpen-Wärmeübertrager 3.2 kann neben der direkten Kondensation oder Gaskühlung auch als indirekt den Luftstrom erwärmender Kältemittel-Wärmesenkenfluid-Wärmeübertrager ausgeführt werden, wobei das Wärmesenkenfluid bspw. eine Wasser-Glykol-Gemisch ist.

Zur Durchführung des Luft-Wärmepumpenbetriebs mittels des direkten oder indirekten Kondensators oder Gaskühlers 2.3 als Wärmepumpenverdampfer strömt das Kältemittel aus dem Wärmepumpen-Wärmeübertrager 3.2 über das geöffnete Absperrorgan A1 in den Hochdruckabschnitt 2.2 und wird mittels des Wärmepumpen-Expansionsorgans AE3 in den direkten oder indirekten Kondensator oder Gaskühler 2.3 zur Aufnahme von Wärme aus der Umgebungsluft entspannt und strömt anschließend über den Wärmepumpenrückführzweig 3.4 zurück zum Kältemittelverdichter 2.1. Die Expansionsorgane AE1, AE2 und AE4 bleiben dabei geschlossen.

Wird ein Kombinationsbetrieb aus Wasser- und Luft-Wärmepumpe realisiert, so ist neben dem Chiller-Expansionsorgan AE1 auch das Wärmepumpen-Expansionsorgan AE3 über ein Steuergerät aktiv mit eingebunden und beide werden zur Einstellung und zum Erreichen der Zielgrößen entsprechend angesteuert.

Bei einem Reheat-Betrieb wird der in den Fahrzeuginnenraum zugeführte Zuluftstrom L mittels des Verdampfers 2.5 zunächst gekühlt und damit entfeuchtet, um anschließend mit der dem Zuluftstrom L entzogenen Wärme sowie der dem Kältemittel über den Kältemittelverdichter 2.1 zugeführten Wärme mittels des Wärmepumpen-Wärmeübertragers 3.2 den Zuluftstrom L zumindest teilweise wieder zu erwärmen.

Ein Reheat-Betrieb der Kälteanlage 1 wird in Abhängigkeit der Wärmebilanz auf unterschiedliche Weise durchgeführt.

Bei einem Wärmeüberschuss im Reheat-Betrieb wird neben der Wärmeabgabe an den Zuluftstrom L des Fahrzeuginnenraums über den Wärmepumpen-Wärmeübertrager 3.2 zusätzlich über den direkten oder indirekten Kondensator oder Gaskühler 2.3 Wärme an die Umgebung des Fahrzeugs abgegeben, bevor das Kältemittel über den Verdampfer 2.5 wieder zurück zum Kältemittelverdichter 2.1 strömt. Hierzu strömt das Kältemittel aus dem Wärmepumpen-Wärmeübertrager 3.2 bei geschlossenem Absperrorgan A1 des zweiten Reheat-Zweiges 5.1 in den ersten Reheat-Zweig 3.3. Dort wird mittels des Reheat-Expansionsorgans AE4 das Kältemittel auf einen Mitteldruck in den direkten oder indirekten Kondensator oder Gaskühler 2.3 entspannt. Anschließend strömt das Kältemittel über den inneren Wärmeübertrager 8 in den Verdampfer 2.5, wo es zuvor mittels des Verdampfer-Expansionsorgans AE2 auf Niederdruck expandiert wird.

Alternativ kann bei ausreichend verfügbarer Heizleistung am Wärmepumpen-Wärmeübertrager 3.2 das Reheat-Expansionsorgan AE4 so weit geöffnet werden, dass idealerweise im Wärmepumpen-Wärmeübertrager 3.2 und im direkten oder indirekten Kondensator oder Gaskühler 2.3 dasselbe Hochdruckniveau anliegt. Ist neben dem Niederdruck- und Hochdruckniveau ein solches Mitteldruckniveau nicht erwünscht, kann das Reheat-Expansionsorganen AE4 durch das Absperrorgan A6 ersetzt werden.

Bei einem Wärmemangel, d. h. bei einem Heizleistungsdefizit am Wärmepumpen-Wärmeübertrager 3.2, wird neben dem Verdampfer 2.5 auch der Chiller 2.6 als Wärmequelle eingesetzt.

Bei diesem Reheat-Betrieb wird zunächst bei offenem Absperrorgan A3 der Heizzweig 3.1 und damit auch der Wärmepumpen-Wärmeübertrager 3.2 mit Kältemittel durchströmt, welches anschließend bei geöffnetem Absperrorgan A1 sowohl in den Verdampfer 2.5 als auch in den Chiller 2.6 mittels der zugehörigen Expansionsorgane AE1 und AE2 entspannt wird. Das Wärmepumpen-Expansionsorgan AE3 und das Reheat-Expansionsorgan AE4 sind bei diesem Reheat-Betrieb geschlossen.

Aus dem Verdampfer 2.5 strömt das Kältemittel über das Absperrorgan A5, den Niederdruck-Akkumulator 2.7 und den inneren Wärmeübertrager 8 wieder zurück zum Kältemittelverdichter 2.1. Das Kältemittel aus dem Chiller 2.6 strömt über das Rückschlagventil R3, den Niederdruck-Akkumulator 2.7 und den inneren Wärmeübertrager 8 ebenso wieder zurück zum Kältemittelverdichter 2.1. Die in dem Verdampfer 2.5 sowie in dem Chiller 2.6 aufgenommene Wärme wird gemeinsam mit dem über den Kältemittelverdichter 2.1 eingetragenen Wärmestrom über den Wärmepumpen-Wärmeübertrager 3.2 wieder an den in das Fahrzeuginnere geführten Zuluftstrom L abgegeben.

Alternativ kann bei einem Wärmemangel der direkte und indirekte Kondensator oder Gaskühler 2.3 entweder anstelle des Chillers 2.6 als Wärmequelle eingesetzt werden oder als zusätzlich Wärmequelle parallel zum Chiller 2.6 geschaltet werden.

Bei ausreichender Heizleistung im Kältemittelkreislauf 2 wird nur der Verdampfer 2.5 mit Kältemittel durchströmt.

Eine Umschaltung zwischen den oben beschriebenen Betriebsmodi erfolgt über eine Ansteuerung der einzelnen Absperrorgane, die entweder als Absperrventil oder als Expansionsventil ausgebildet sind.

Mit dem zweiten Erweiterungsmodul 4 lässt sich der Verdampfer 2.5 bei verschiedenen Wärmepumpen-Verschaltungen in Verbindung mit dem Wärmepumpen-Wärmeübertrager 3.2 als Vorwärmer einsetzen.

Hierzu ist der Vorwärmzweig 4.1 mit dem Vorwärm-Expansionsorgan AE5 vorgesehen, welcher den Austritt 3.20 des Wärmepumpen-Wärmeüber-tragers 3.2 mit dem Austritt 2.50 des Verdampfers 2.5 verbindet, wobei sich der Austritt 2.50 auf den AC-Betrieb bezieht. Zwischen dem Vorwärm-Expansionsorgan AE5 und dem Austritt 2.50 des Verdampfers 2.5 ist in dem Vorwärmzweig 4.1 ein Rückschlagventil R1 so angeordnet, so dass ein Kältemittelfluss aus dem Verdampfer 2.5 im AC-Betrieb in den Vorwärmzweig 4.1 verhindert wird. Alternativ kann das Rückschlagventil auch entfallen, jedoch muss in diesem Fall eine genaue Erfassung einer Druckniveauänderung am Verdampfer 2.5 und am Heizregister 3.5 erfolgen, um per Steuergerät das bedarfsgerechte/ situationskorrekte Öffnen und Schließen des Vorwärm-Expansionsorgan AE5 zu veranlassen. Das Absperrorgan A5 des zweiten Erweiterungsmoduls 4 ist stromabwärts des Verdampfers 2.5 und des Vorwärmzweiges 4.1 angeordnet, so dass Kältemittel aus dem Verdampfer 2.5 und gegebenenfalls aus dem Vorwärmzweig 4.1, aufgrund der erfolgten Kältemittelabsaugung aus einem inaktiven Systemabschnitt, zunächst über das Absperrorgan A5 und anschließend über den Niederdruck-Akkumulator 2.7 und den Niederdruckabschnitt des inneren Wärmeübertragers 8 zurück zum Kältemittelverdichter 2.1 geführt wird.

Das von dem Kältemittelverdichter 2.1 auf Hochdruck verdichtete Kältemittel strömt durch den als Heizregister ausgeführten Wärmepumpen-Wärmeübertrager 3.2 direkt in diesen Vorwärmzweig 4.1 und wird mittels des Vorwärm-Expansionsorgan AE5 in den Verdampfer 2.5 unter Abgabe von Wärme an den in den Fahrzeuginnenraum zugeführten Zuluftstrom L zwischenexpandiert oder unter Einhaltung der zulässigen Druckwerte unexpandiert in den Verdampfer geleitet. Das ebenso mit dem Austritt 2.50 des Verdampfers 2.5 verbundene Absperrorgan A5 ist gesperrt, so dass ein Rückfluss des Kältemittels direkt zum Kältemittelverdichter 2.1 verhindert wird. Das in den Verdampfer 2.5 geleitete Kältemittel strömt anschließend über das vollständig geöffnete Verdampfer-Expansionsorgan AE2 und wird anschließend über das Chiller-Expansionsorgan AE1 in den Chiller 2.6 entspannt, ohne dass kühlmittelseitig ein Volumenstrom erzeugt wird. Auf diese Weise wird ein indirekter Dreiecksprozess als Wärmepumpenprozess realisiert. Anschließend wird das Kältemittel über den Niederdruck-Akkumulator 2.7 und den inneren Wärmeübertrager 8 zurück zum Kältemittelverdichter 2.1 geführt.

Mit diesem Erweiterungsmodul 4 können weitere Entfeuchtungsprozesse mittels des Verdampfers 2.5 durchgeführt werden, insbesondere wenn zur Durchführung eines Reheat-Betriebes eine Umgebungstemperatur von weniger als 0 °C vorliegt und der Umluftanteil in dem Zuluftstrom L für den Fahrzeuginnenraum erhöht ist und damit ein Trocknungsbedarf bestehen könnte.

Für einen Entfeuchtungsprozess im Rahmen eines Reheat-Betriebs ist das Absperrorgan A5 als Expansionsorgan AE6 ausgeführt, so dass das Kältemittel über den Wärmepumpen-Wärmeübertrager 3.2 bei geöffnetem Absperrorgan A1 mittels des Verdampfer-Expansionsorgans AE2 auf ein Zwischendruckniveau in den Verdampfer 2.5 mit einer Verdampfungstemperatur von größer als 0 °C entspannt wird. Anschließend wird das Kältemittel mittels des als Expansionsorgan AE6 ausgeführten Absperrorgans A5 auf Niederdruckniveau entspannt und über den Niederdruck-Akkumulator 2.7 und den inneren Wärmeübertrager 8 zum Kältemittelverdichter 2.1 zurückgeführt.

Für einen weiteren Entfeuchtungsprozess im Rahmen eines Reheat-Betriebs wird das Kältemittel über den Vorwärmzweig 4.1 mittels des Vorwärm-Expansionsorgans AE5 auf Zwischendruckniveau in den Verdampfer 2.5 in umgekehrter Richtung im Vergleich zum AC-Betrieb expandiert, wobei auch mittels des Verdampfer-Expansionsorgans AE2 zusätzlich das Zwischendruckniveau eingestellt wird. Anschließend strömt das Kältemittel unter Expansion mittels des Chiller-Expansionsorgans AE1 und/oder mittels des Wärmepumpen-Expansionsorgans AE3 in den direkten oder indirekten Kondensator oder Gaskühler 2.3, um diese Komponenten als weitere Wärmequellen zu nutzen.

Zusammenfassend sind bezüglich dieser Kälteanlage 1 gemäß Figur 1 eine große Anzahl von Verschaltungs-Varianten damit viele Möglichkeiten zum Systembetrieb gegeben.

Ausgehend von dieser Kälteanlage 1 gemäß Figur 1 kann durch eine Reduktion der Ergänzungsmodule und durch einen passenden Austausch von Komponenten die Anzahl der Funktionen reduziert und damit eine einfachere damit kostengünstigere Schaltungsvariante realisiert werden.

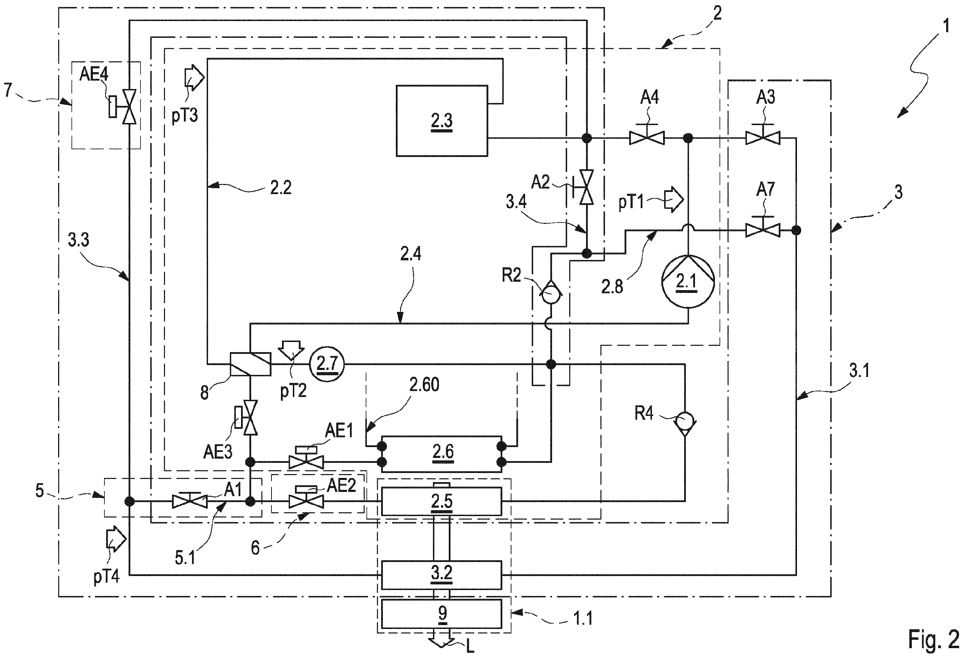

So zeigt die Figur 2 eine Kälteanlage 1, die gegenüber der Kälteanlage 1 nach Figur 1 ohne das zweite Erweiterungsmodul 4 aufgebaut ist. Anstelle des Ventilorgans A5 (vgl. Figur 1) ist ein Rückschlagventil R4 vorgesehen, welches so angeordnet ist, dass ein Rückfluss von Kältemittel aus dem Chiller 2.6 in den Verdampfer 2.5 verhindert wird. Da nunmehr ein Vorwärmzweig nicht vorgesehen ist, wird der Verdampfer 2.5 lediglich unidirektional durchströmt.

Die Kälteanlage 1 nach Figur 2 weist ferner einen Absaugzweig 2.8 mit einem Absperrorgan A7 auf. Dieser Absaugzweist 2.8 verbindet den Heizzweig 3.1 zwischen Absperrorganen A3 und dem Wärmepumpen-Wärmeübertrager 3.2 mit dem Absperrorganen A2 und dem Rückschlagventil R2 des Wärmepumpenrückführzweiges 3.4.

Der Wärmepumpen-Wärmeübertrager 3.2 dient der Beheizung des Fahrzeuginnenraums, gegebenenfalls in Verbindung mit einem Hochvolt-Heizer 9.

Mit dieser Kälteanlage 1 gemäß Figur 2 können auch die im Zusammenhang mit der Kälteanlage 1 gemäß Figur 1 beschriebenen Reheat-Funktionen realisiert werden.

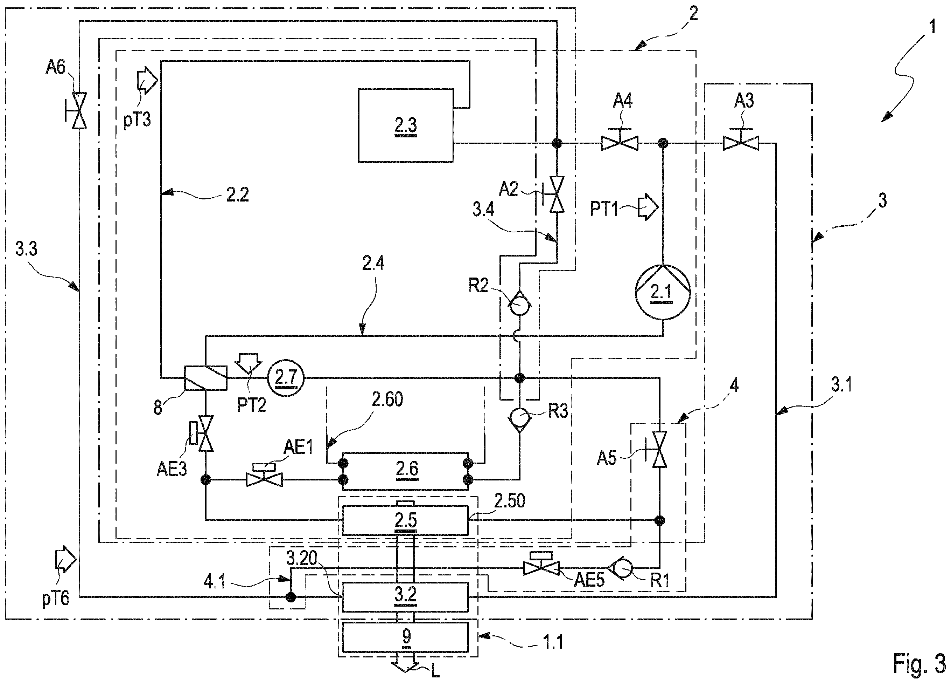

Die Kälteanlage 1 nach Figur 3 ist ebenso ausgehend von der Kälteanlage 1 gemäß Figur 1 konzipiert. Diese Kälteanlage 1 besteht aus dem Basismodul 2 sowie dem ersten Erweiterungsmodul 3 und dem zweiten Erweiterungsmodul 4.

Bei dieser Kälteanlage 1 nach Figur 3 wird der Wärmepumpen-Wärmeübertrager 3.2 als Heizer und der Verdampfer 2.5 als Luftvorwärmer eingesetzt, wobei der Verdampfer 2.5 bidirektional durchströmbar ist. Eine Reheat-Funktion mit Wärmeüberschuss ist über den Reheat-Zweig 3.3 mit dem Absperrorganen A6 realisierbar.

### BEZUGSZEICHEN:

- 1: Kälteanlage
- 1.1: Klimagerät

- 2: Basismodul
- 2.1: Kältemittelverdichter
- 2.2: Hochdruckabschnitt
- 2.3: direkter oder indirekter Kondensator oder Gaskühler
- 2.4: Niederdruckabschnitt
- 2.5: Verdampfer
- 2.50: Austritt des Verdampfers 2.5 im AC-Betrieb
- 2.6: Chiller
- 2.7: Niederdruck-Akkumulator
- 2.8: Absaugzweig

- 3: erstes Erweiterungsmodul
- 3.1: Heizzweig
- 3.2: Wärmepumpen-Wärmeübertrager
- 3.20: Austritt des Wärmepumpen-Wärmeübertragers 3.2
- 3.3: erster Reheat-Zweig
- 3.4: Wärmepumpenrückführzweig

- 4: zweites Erweiterungsmodul
- 4.1: Vorwärmzweig

- 5: drittes Erweiterungsmodul
- 5.1: zweiter Reheat-Zweig

- 6: viertes Erweiterungsmodul
- 7: fünftes Erweiterungsmodul
- 8: innerer Wärmeübertrager
- 9: elektrischer Hochvolt-Heizer
- A1: Absperrorgan
- A2: Absperrorgan
- A3: Absperrorgan
- A4: Absperrorgan
- A5: Absperrorgan
- A6: Absperrorgan
- A7: Absperrorgan

- AE1: Chiller-Expansionsorgan
- AE2: Verdampfer-Expansionsorgans
- AE3: Wärmepumpen-Expansionsorgan
- AE4: Reheat-Expansionsorgan
- AE5: Vorwärm-Expansionsorgan
- AE6: Expansionsorgan

- L: Zuluftstrom

- R1: Rückschlagventil
- R2: Rückschlagventil
- R3: Rückschlagventil
- R4: Rückschlagventil

- pT1: Druck-Temperatursensor
- pT2: Druck-Temperatursensor
- pT3: Druck-Temperatursensor
- pT4: Druck-Temperatursensor
- pT5: Druck-Temperatursensor
- pT6: Druck-Temperatursensor

## Patentansprüche

1. Modulare Kälteanlage (1) für ein Fahrzeug mit mehreren Modulen zur Realisierung unterschiedlicher Funktionen:
a) einem Basismodul (2) zur Realisierung einer Kühl-Funktion, aufweisend
a1) einen Kältemittelverdichter (2.1),
a2) einen mit dem Hochdruckauslass des Kältemittelverdichters (2.1) mittels eines Absperrorgans (A4) verbindbaren Hochdruckabschnitt (2.2) mit einem direkten oder indirekten Kondensator oder Gaskühler (2.3), wobei der direkte oder indirekte Kondensator oder Gaskühler (2.3) in einem Kälteanlagen-Betrieb und in einem Wärmepumpen-Betrieb betreibbar ist, und
a3) einen mit dem Niederdruckeinlass des Kältemittelverdichters (2.1) verbundenen Niederdruckabschnitt (2.4) mit mindestens einem Verdampfer (2.5) und einem Chiller (2.6) mit vorgeschalteten Chiller-Expansionsorgans (AE1), wobei der Niederdruckabschnitt (2.4) stromaufwärts über ein Wärmepumpen-Expansionsorgan (AE3) mit dem Hochdruckabschnitt (2.2) verbunden ist,
b) einem ersten Erweiterungsmodul (3) zur Realisierung einer Heiz- und einer Reheat-Funktion, aufweisend
b1) einen mit dem Hochdruckauslass des Kältemittelverdichters (2.1) mittels eines Absperrorgans (A3) verbindbaren Heizzweig (3.1) mit einem Wärmepumpen-Wärmeübertrager (3.2), welcher über einen ersten Reheat-Zweig (3.3) mit einem absperrbaren Ventilorgan (A6) mit dem direkten oder indirekten Kondensator oder Gaskühler (2.3) verbindbar ist, und
b2) einen Wärmepumpenrückführzweig (3.4) mit einem absperrbaren Ventilorgan (A2) zum Verbinden des direkten oder indirekten Kondensators oder Gaskühlers (2.3) mit dem Niederdruckabschnitt (2.4),
**gekennzeichnet durch** die Kombination mit
c) einem zweiten Erweiterungsmodul (4) zur Realisierung einer Luftvorwärm-Funktion mittels des Verdampfers (2.5), aufweisend
c1) einen Vorwärmzweig (4.1) mit einem Vorwärm-Expansionsorgan (AE5), wobei der Vorwärmzweig (4.1) einen Austritt (3.20) des Wärmepumpen-Wärmeübertragers (3.2) mit einem Austritt (2.50) des Verdampfer (2.5) verbindet, wobei der Austritt (2.50) des Verdampfers (2.5) auf dessen Kühlbetrieb bezogen ist, und
c2) ein absperrbares Ventilorgan (A5), mit welchem der Niederdruckabschnitt (2.4) des Basismoduls (2) mit dem Austritt (2.50) des Verdampfers (2.5) verbunden ist, wobei
- zur Reduzierung der Anzahl der Funktionen auf das erste Erweiterungsmodul oder das zweite Erweiterungsmodul verzichtbar ist, oder
- zur Realisierung einer Basis-Kälteanlage auf das erste Erweiterungsmodul und das zweite Erweiterungsmodul verzichtbar ist.

2. Modulare Kälteanlage (1) nach Anspruch 1, bei welchem das absperrbare Ventilorgan (A5) des zweiten Erweiterungsmoduls (4) durch ein Expansionsorgan (AE6) ersetzt ist.

3. Modulare Kälteanlage (1) nach Anspruch 1 oder 2 mit
d) einem dritten Erweiterungsmodul (5), aufweisend einen zweiten Reheat-Zweig (5.1) mit einem absperrbaren Ventilorgan (A1), wobei der zweite Reheat-Zweig (5.1) den Wärmepumpen-Wärmeübertrager (3.2) ausgangsseitig mit dem Wärmepumpen-Expansionsorgan (AE3) verbindet.

4. Modulare Kälteanlage (1) nach Anspruch 1, 2 oder 3 mit e) einem vierten Erweiterungsmodul (6), bei welchem der Verdampfer (2.5) eingangsseitig mit einem Verdampfer-Expansionsorgan (AE2) verbunden ist.

5. Modulare Kälteanlage (1) nach einem der vorhergehenden Ansprüche mit
f) einem fünften Erweiterungsmodul (7), bei welchem das absperrbare Ventilorgan (A6) des ersten Reheat-Zweiges (3.3) als Reheat-Expansionsorgan (AE4) ausgebildet ist.

## Claims

1. Modular cooling system (1) for a vehicle with a plurality of modules for performing different functions:
a) a base module (2) for performing a cooling function, having
a1) a refrigerant compressor (2.1),
a2) a high-pressure section (2.2) connectable to the high-pressure outlet of the refrigerant compressor (2.1) by means of a shut-off element (A4) having a direct or indirect condenser or gas cooler (2.3), wherein the direct or indirect condenser or gas cooler (2.3) can be operated in a cooling system operation and in a heat pump operation, and
a3) a low-pressure section (2.4) connected to the low-pressure inlet of the refrigerant compressor (2.1) with at least one evaporator (2.5) and a chiller (2.6) with chiller extension elements (AE1) connected upstream, wherein the low-pressure section (2.4) is connected upstream to the high-pressure section (2.2) via a heat pump extension element (AE3),
b) a first extension module (3) for performing a heating and reheating function, having
b1) a heating branch (3.1) connectable to the high-pressure outlet of the refrigerant compressor (2.1) by means of a shut-off element (A3) with a heat pump heat exchanger (3.2), which can be connected to the direct or indirect condenser or gas cooler (2.3) via a first reheating branch (3.3) with a blockable valve element (A6), and
b2) a heat pump return branch (3.4) with a blockable valve element (A2) for connecting the direct or indirect condenser or gas cooler (2.3) to the low-pressure section (2.4),
**characterised by** the combination with
c) a second extension module (4) for performing an air-preheating function by means of the evaporator (2.5), having
c1) a preheating branch (4.1) with a preheating extension element (AE5), wherein the preheating branch (4.1) connects an outlet (3.20) of the heat pump heat exchanger (3.2) to an outlet (2.50) of the evaporator (2.5), wherein the outlet (2.50) of the evaporator (2.5) is related to its cooling operation, and
c2) a blockable valve element (A5), by which the low-pressure section (2.4) of the base module (2) is connected to the outlet (2.50) of the evaporator (2.5), wherein
- to reduce the number of functions the first extension module or the second extension module can be omitted, or
- the first extension module and the second extension module can be omitted for providing a basic cooling system.

2. Modular cooling system (1) according to claim 1, wherein the blockable valve element (A5) of the second extension module (4) is replaced by an extension element (AE6).

3. Modular cooling system (1) according to claim 1 or 2 having
d) a third extension module (5), having a second reheating branch (5.1) with a blockable valve element (A1), wherein the second reheating branch (5.1) connects the heat pump heat exchanger (3.2) on the output side to the heat pump extension element (AE3).

4. Modular cooling system (1) according to claim 1, 2 or 3 having
e) a fourth extension module (6), in which the evaporator (2.5) is connected on the input side to an evaporator extension element (AE2).

5. Modular cooling system (1) according to any one of the preceding claims having
f) a fifth extension module (7), in which the blockable valve element (A6) of the first reheating branch (3.3) is configured as a reheating extension element (AE4).

## Revendications

1. Système de réfrigération modulaire (1) pour un véhicule avec plusieurs modules pour la réalisation de différentes fonctions :
a) un module de base (2) pour réaliser une fonction de refroidissement, présentant
a1) un compresseur de réfrigérant (2.1),
a2) une section haute pression (2.2) qui peut être reliée à la sortie haute pression du compresseur de réfrigérant (2.1) au moyen d'un organe d'arrêt (A4) présentant un condensateur ou un refroidisseur de gaz (2.3) direct ou indirect, dans lequel le condensateur ou le refroidisseur de gaz (2.3) direct ou indirect peut être utilisé dans un mode de système de réfrigération et dans un mode de pompe à chaleur, et
a3) une section basse pression (2.4) reliée à l'entrée basse pression du compresseur de réfrigérant (2.1) avec au moins un évaporateur (2.5) et un refroidisseur (2.6) avec un organe de détente de refroidisseur (AE1) en amont, dans lequel la section basse pression (2.4) est reliée en amont à la section haute pression (2.2) via un organe de détente de pompe à chaleur (AE3),
b) un premier module d'extension (3) pour réaliser une fonction de chauffage et de réchauffage, présentant
b1) une branche de chauffage (3.1) pouvant être reliée à la sortie haute pression du compresseur de réfrigérant (2.1) au moyen d'un organe d'arrêt (A3) avec un échangeur de chaleur de pompe à chaleur (3.2) qui peut être relié au condensateur ou au refroidisseur de gaz (2.3) direct ou indirect par l'intermédiaire d'une première branche de réchauffage (3.3) avec un organe de soupape (A6) pouvant être fermé, et
b2) une branche de retour de pompe à chaleur (3.4) avec un organe de soupape (A2) pouvant être fermé pour relier le condensateur ou le refroidisseur de gaz (2.3) direct ou indirect à la section basse pression (2.4),
**caractérisé par** la combinaison avec
c) un deuxième module d'extension (4) pour réaliser une fonction de préchauffage de l'air au moyen de l'évaporateur (2.5), présentant
c1) une branche de préchauffage (4.1) avec un organe de détente de préchauffage (AE5), dans lequel la branche de préchauffage (4.1) relie une sortie (3.20) de l'échangeur de chaleur de pompe à chaleur (3.2) à une sortie (2.50) de l'évaporateur (2.5), dans lequel la sortie (2.50) de l'évaporateur (2.5) correspond à son mode de refroidissement, et
c2) un organe de soupape (A5) pouvant être fermé, avec lequel la section basse pression (2.4) du module de base (2) est reliée à la sortie (2.50) de l'évaporateur (2.5), dans lequel
- pour réduire le nombre de fonctions, il est possible de se passer du premier module d'extension ou du deuxième module d'extension, ou
- pour réaliser un système de réfrigération de base, il est possible de se passer du premier module d'extension et du deuxième module d'extension.

2. Système de réfrigération modulaire (1) selon la revendication 1, dans lequel l'organe de soupape (A5) pouvant être fermé du deuxième module d'extension (4) est remplacé par un organe de détente (AE6).

3. Système de réfrigération modulaire (1) selon la revendication 1 ou 2 avec
d) un troisième module d'extension (5), présentant une seconde branche de réchauffage (5.1) avec un organe de soupape (A1) pouvant être fermé, dans lequel la seconde branche de réchauffage (5.1) relie l'échangeur de chaleur de pompe à chaleur (3.2) côté sortie à l'organe de détente de pompe à chaleur (AE3).

4. Système de réfrigération modulaire (1) selon la revendication 1, 2 ou 3 avec
e) un quatrième module d'extension (6), dans lequel l'évaporateur (2.5) est relié côté entrée à un organe de détente d'évaporateur (AE2).

5. Système de réfrigération modulaire (1) selon l'une quelconque des revendications précédentes, avec
f) un cinquième module d'extension (7), dans lequel l'organe de soupape (A6) pouvant être fermé de la première branche de réchauffage (3.3) est conçu comme un organe de détente de réchauffage (AE4).
